# EUROPEAN PATENT SPECIFICATION

(11) **EP 0 947 426 B1**
(45) Date of publication and mention of the grant of the patent: **05.01.2005**
(21) Application number: 99302323.3
(22) Date of filing: 25.03.1999
(51) Int. Cl.: B65B 13/32

(54) **Strap welding tool**
Streifensiegelapparat
Outil de soudage d'un lien de cerclage

(30) Priority: 03.04.1998 US 54663
(43) Date of publication of application: 06.10.1999
(73) Proprietor: ILLINOIS TOOL WORKS INC., Glenview, Illinois 60025 (US)
(72) Inventor: Figiel, Janusz, Mount Prospect, Illinois 60056 (US); Drabarek, Peter, Chicago, Illinois 60630 (US)
(74) Representative: Rackham, Stephen Neil

(56) References cited:
- DE-A- 4 014 305

## Description

The invention relates generally to strapping tools, and more particularly to improved plastic strap welding tools useable in combination with strap tensioning tools and methods therefor.

In load packaging operations, it is known generally to weld overlapping portions of plastic strap tensioned about the load. US-A-3,564,033, discloses a pneumatically operated strapping tool that forms a friction-fused joint, or weld, by vibrating contacting interfacial surfaces of overlapping plastic strap portions. The strapping tool includes a clamping member for anchoring a free strap end portion, and a rotatable feed wheel cooperating with an anvil foot to engage a feed strap portion, which is tensioned about the load. A clutch engagably couples the feed wheel to a pneumatic motor, which also vibrates a jaw that welds the overlapping strap portions. The motor stalls and tensioning stops at a specified strap tension, and a pneumatically actuated ram disengages the motor from the feed wheel and engages a feed wheel brake, which maintains feed wheel tension on the tensioned strap during welding. The actuated ram also moves the vibrating jaw into frictional engagement with the overlapping strap portions. As the vibrating jaw moves toward he overlapping strap portions, a shearing edge severs the upper strap, and the overlapping strap portions are subsequently welded together. Thereafter, pressure is maintained on the welded overlapping strap portions for a cool down period to complete the weld.

US-A-5,380,393, discloses a strapping tool having a pneumatic circuit for automatically controlling tool operation, including the timing and duration of strap welding and the cool down period. A pneumatically actuated ram extended after strap tensioning pivots a cam that moves a vibrating welding plate into contact with overlapping strap portions to form a weld. Vibration of the welding plate terminates after a time period controlled by the accumulation of air pressure in a chamber. Thereafter, air bled from a cylinder counter-pivots the cam to move the welding plate away from the welded strap portions after a cool down period.

Prior art pneumatic strapping tools require many system components that increase the size and weight of the tool, and increase costs related to tool manufacturing, operation and maintenance. The tool of US-A-3,564,033, for example, requires a pneumatically actuated ram for disengaging the air motor from the feed wheel, engaging the feed wheel brake, and moving the vibrating jaw into engagement with the overlapping strap portions. US-A-5,380,393 requires pneumatic rams for moving the welding plate into contact with the overlapping strap portions, and a combination of cylinders, chambers and valves for controlling the timing and duration of various tool operations. Although the pneumatic circuit of US-A-5,380,393 automates many strapping operations performed manually in prior art tools, control and timing of the various tool operations is relatively imprecise, producing inconsistent strap tension and weld results.

Prior art strapping tools, including those discussed above, also have generally a relatively long base plate disposed between the strap and the load during strap tensioning and welding. Thereafter, the base plate is removed from between the tensioned strap and load. The relatively long base plate, however, has a tendency to create slack in the tensioned strap after its removal, particularly in applications where the load is relatively small or shaped irregularly. The loss in strap tension depends generally on the size of the base portion and on the size of the load, and in many cases results in inadequately tensioned strap.

DE-A-4 014 305 discloses a strapping tool according to the preamble of claim 1.

The present invention is drawn toward advancements in the art of strapping tools generally, and more particularly to strapping tools for forming friction fused joints, or welds, by vibrating contacting interfacial surfaces of overlapping strap portions, especially plastic strap portions.

According to one aspect of this invention a strapping tool for welding overlapping strap portions, the strapping tool comprises a sealing gripper movable toward a first support member;
a vibratable welding pad movable toward a second support member;
a vibrator motor actuatable to vibrate the welding pad;
a first cam member for moving the sealing gripper toward the first support member to engage and retain tensioned strap disposed between the sealing gripper and the first support member;
a second cam member for enabling the vibrator motor to vibrate the welding pad; and,
a third cam member for moving the welding pad toward the second support member to engage and weld overlapping strap portions disposed between the welding pad and the second support member.

According to another aspect of this invention a method for welding overlapping strap portions with a strapping tool, comprises moving a sealing gripper toward a first support member with a first cam member to engage and retain tensioned strap disposed between the sealing gripper and the first support member;
enabling a vibrator motor with a second cam member to vibrate a welding pad; and,
moving the vibrating welding pad toward a second support member with a third cam member to engage and weld overlapping strap portions disposed between the welding pad and the second support member.

The present invention provides a strap welding tool and more particularly plastic strap welding tools, and methods therefor that eliminate control and timing inconsistencies inherent in prior art pneumatically operated strapping tools by controlling various tool operations and especially the welding operation with cam members, which are preferably rotated by a common drive shaft.

Preferably the strap welding tools and methods therefor reduce columnar strength of a strap portion engagable by the vibrating welding pad by deforming the strap portion, and more particularly by bending the strap portion proximate the welding pad, and preferably forming a gap between the overlapping strap portions.

A particular embodiment of the present invention will now be described with reference to the accompanying drawings; in which:-
FIG. 1 is a partial side elevational view of an exemplary cam operated strapping tool for welding overlapping strap portions;
FIG. 2a is a partial sectional view of a first cam member of FIG. 1;
FIG. 2b is a partial sectional view of a second cam member of FIG. 1;
FIG. 2c is a partial sectional view of a third cam member of FIG. 1;
FIG. 3 is a strap welding tool operational flow diagram; and,
FIG. 4 is a partial side elevational view of overlapping strap portions on an exemplary base plate of the strapping tool.

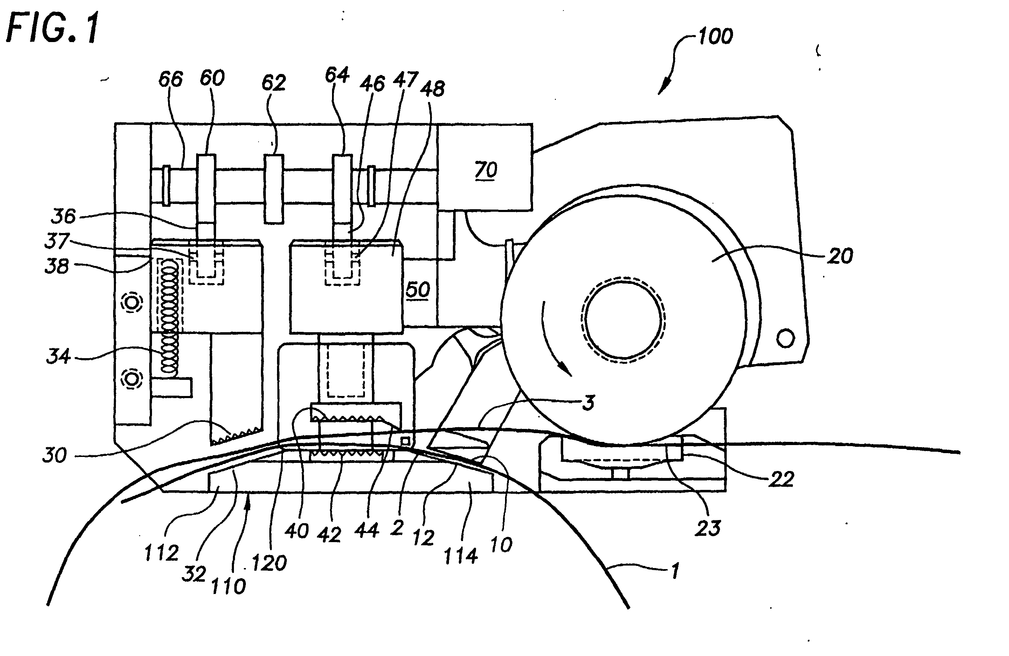

FIG. 1 illustrates a strapping tool 100 for welding a strap 1 tensioned about a load, not shown. The tool 100 comprises generally a tensioning gripper 10 movable toward a tension support 12 to engage and retain a free strap end portion 2 therebetween during strap tensioning. The gripping of the free strap end portion 2 may be controlled by manually depressing a gripping switch that actuates the tensioning gripper 10. A rotatable feed wheel 20 is movable toward a foot member 22 to engage and feed a feed strap portion 3 disposed therebetween. The tensioning of the feed strap portion 3 may be initiated by manually depressing a tensioning switch that actuates an air motor rotatably driving the feed wheel 20. The air motor stalls and the feed wheel 20 stops tensioning when a pre-determined level of strap tension is applied, as is known generally. The feed strap portion 3 partially overlaps the free strap portion 2 at a strap welding position where the overlapping strap portions are welding together as discussed further below.

In the exemplary embodiment, only the feed strap portion 3 is disposed between the feed wheel 20 and the foot member 22, and the foot member 22 has a relatively smooth surface 23 to permit sliding movement of the feed strap portion 3 therebetween during tensioning. In an alternative embodiment, the free strap end portion 2 and the feed strap portion 3 are both disposed between the feed wheel 20 and the foot member 22, and the foot member 22 has a toothed surface 23 to engage and retain the free strap end portion 2 while the feed strap portion 3 slides relative thereto during tensioning. Tensioning with only the feed strap portion 3 between the feed wheel 20 and the foot member 22 reduces strap slippage during tensioning, and permits reducing the effective base length of the tool, thereby reducing loss of strap tension upon removal of the tool from between the tensioned strap and the load, particularly small and irregular loads, as discussed further below.

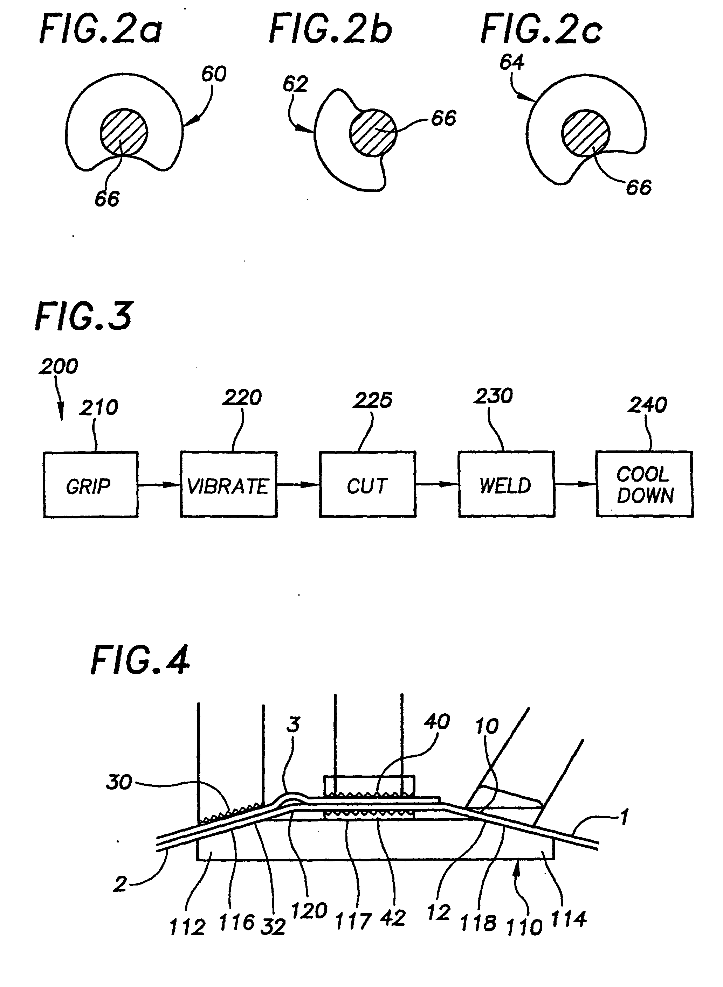

FIGS. 1 and 4 illustrate the tool 100 including a sealing gripper 30 movable toward a first, or sealing, support member 32 to engage and retain overlapping strap portions after tensioning by the feed wheel 20 as discussed above. FIG. 1 illustrates the sealing gripper 30 biased away from the first support member 32 by a compressed spring member 34 or other known means. The tool 100 also includes a vibratable welding pad 40 movable toward a second, or welding, support member 42. The welding pad 40 is similarly biased away from the second support member 42. A vibrator motor 50 is actuatable to vibrate the welding pad 40, and preferably the vibrator motor 50 is a pneumatically operated air motor.

A first cam member 60 is operable to move the sealing gripper 30 against its bias and toward the first support member 32 to engage and retain tensioned strap disposed therebetween. A second cam member 62 is operable to enable the vibrator motor 50, which vibrates the welding pad 40, for example by actuating a pneumatic valve or switch. And a third cam member 64 is operable to move the welding pad 40 against its bias and toward the second support member 42 to engage and weld overlapping strap portions disposed therebetween.

FIGS. 2a, 2b and 2c illustrate an exemplary cam assembly configuration wherein the first, second, and third cam members 60, 62 and 64 each have corresponding lobes and depressions for accurately controlling the actuation and timing of the sealing gripper 30, the vibration motor 50, and the welding pad 40, respectively. The radial position of the lobes and depressions of the cam members 60, 62 and 64 may vary depending upon the particular configuration of the tool. The position of the second cam member 62, for example, depends on the location of the vibrator motor 50 switch. The welding operation of the present invention is thus controlled without the relatively imprecisely controllable air cylinder actuated rams of the prior art.

The tool 100 preferably includes a first roller member 36 rotatable about an axle 37 coupled to an upper portion 38 of the sealing gripper 40. A second roller member 46 is similarly rotatable about an axle 47 coupled to an upper portion 48 of the welding pad 40. The first and second roller member 36 and 46 are engagable by the first and third cam members 60 and 64, respectively, to accurately actuate the sealing gripper 30 and the welding pad 40. The first and second roller members 36 and 46 also minimize mechanical wear and extend the operable life of the tool.

FIG. 3 is a flow diagram 200 illustrating generally the strap welding operation of the strapping tool 100. The sealing gripper 30 is moved toward the first support member 32 with the first cam member 60 to engage and retain tensioned strap disposed therebetween in a grip step 210. The vibrator motor 50 is actuated by the second cam member 62 to vibrate the welding pad 40 in a vibrate step 220, and the vibrating welding pad 40 is moved toward the second support member 42 by the third cam member 64 to engage and weld the overlapping strap portions in a weld step 230. The second cam member 62 disables the vibrator motor 50 while the third cam member 64 maintains the welding pad 40 positioned toward the second support member 42 to apply pressure on the welded strap portions for a cool down period after the vibrator motor 50 is disabled in a cool down step 240. Usage and wear on the vibrator motor 50 is minimized by operating the vibrator motor 50 only when required for welding, thereby extending the usable life thereof. The welding pad 40 is moved away from the second support member 42 upon expiration of the cool down period, and the sealing gripper 30 may be moved away from the gripper support member 32 any time after expiration of the cool down period.

FIGS. 1 and 3 illustrate the first, second, and third cam members 60, 62 and 64 preferably rotatably supported on a common drive shaft 66 to form a cam assembly rotatably drivable by a cam drive motor 70 coupled to the common drive shaft 66. Rotatably supporting the first, second and the third cam members 60, 62 and 64 with the common drive shaft 66 accurately and precisely controls actuation of the sealing gripper, actuation of the welding pad and the cool down time period, without the inconsistencies and variations inherent in the prior art pneumatically controlled welding operations. The cam drive motor 70 is preferably a pneumatically operated air motor, and is actuatable for example by manually depressing a weld switch after tensioning. The welding operations, or steps, performed by the cam members 60, 62 and 64, as illustrated generally in FIG. 3, proceed automatically and in controlled sequence upon rotation of the common drive shaft 66, whereafter the cam drive motor 70 may be disabled automatically until initiation of a subsequent welding operation by subsequent depressing of the weld switch.

FIG. 1 illustrates the tool 100 further comprising a strap shearing edge 44, which is preferably serrated, disposed on the welding pad 40 for cutting the upper strap portion, and more particularly cutting the feed strap portion ultimately engaged by the vibrating welding pad 40 as the vibrating welding pad 40 is moved toward the second support member 42, but before welding the overlapping strap portions. The flow diagram of FIG. 3 illustrates a strap severing or cut step 225 occurring after the vibrate step 220 and before the weld step 230. Cutting the upper strap portion has the advantage of permitting the cut upper strap portion to vibrate freely under the influence of the vibrating welding pad 40 as required to ensure a complete weld.

FIGS. 1 and 4 illustrate the strapping tool 100 further comprising a base plate 1-10 having generally reduced dimensions, particularly a reduced longitudinal dimension between a leading end portion 112 and a trailing end portion 114 thereof. The reduced dimensions of the base plate 110 facilitate strapping small and irregular shaped loads without loss of strap tension upon removal of the base plate 110 from between the load and the strap after tensioning and welding. The leading end portion 112 and the trailing end portion 114 of the base plate 110 are preferably disposed at angles sloping downwardly and away from the second support member 42, which is located therebetween, thereby further reducing the loss of strap tension upon removal of the base plate 110 by reducing a thickness of the base plate.

FIG. 4 illustrates the first support member 32 disposed on a first portion 116 corresponding generally to the leading end portion 112 of the base plate 110, and the second support member 42 disposed on a second portion 117 of the base plate 110. The third support member 12 is disposed on a third portion 118 corresponding generally to the trailing end portion 114 of the base plate 110.

In embodiments where the sealing gripper 30 and welding pad 40 are located very near each other, it is desirable to reduce a column strength of the overlapping strap portions prior to welding, and particularly the strap portion engaged by the vibrating welding pad 40. The relatively closely spaced sealing gripper 30 and welding pad 40 render the overlapping strap portions relatively rigid and inflexible, thereby interfering with, or obstructing, vibration thereof by the vibrating weld pad 40. This is especially true where the distance between the sealing gripper 30 and the welding pad 40 is less than approximately 2 inches (50mm), as in the exemplary embodiment where a base plate 110 of the tool 100 having relatively reduced dimension forms the first and second support members 32 and 42 for the sealing gripper 30 and the welding pad 40, respectively. Reducing the column strength of the strap portion engaged by the vibrating welding pad 40 ensures liberal vibratory movement of the strap portion, as is required for proper welding.

FIG. 4. illustrates the upper strap portion 3 of the overlapping strap portions at least partially deformed to reduce the column strength thereof, deformation being preferably in a direction away from the first and second support surfaces 32 and 42 between the sealing gripper 30 and the welding pad 40. FIGS. 1 and 4 illustrate the first support member 32 located in a first plane, and the second support member 42 located in a second plane at an angle relative to the first plane, wherein the first and second support members 32 and 42 intersect to form a vertex 120. The vertex 120 may be formed alternatively by another member, for example a rod or bar or other member disposed across the base plate 110 above a common plane of the first and second support members. The column strength is reduced by bending the overlapping strap portions over the vertex 120. A gap is preferably formed between the upper strap portion 3 and a lower strap portion 2 of the overlapping strap portions to further reduce the rigidity or column strength of the upper strap portion 3, and permit a greater degree of vibrational freedom under the vibratory action of the welding pad 40 to ensure an even stronger weld.

## Claims

1. A strapping tool (100) for welding overlapping strap portions (23), the strapping tool comprising:
a sealing gripper (30) movable toward a first support member (32);
a vibratable welding pad (40) movable toward a second support member (42);
a vibrator motor (48) actuatable to vibrate the welding pad (40);
a first cam member (60) for moving the sealing gripper (30) toward the first support member (32) to engage and retain tensioned strap (3) disposed between the sealing gripper (30) and the first support member (32);
a third cam member (64) for moving the welding pad (40) toward the second support member (42) to engage and weld overlapping strap portions (23) disposed between the welding pad (40) and the second support member (42); and **characterised by**
a second cam member (62) for enabling the vibrator motor (48) to vibrate the welding pad (40).

2. A strapping tool according to Claim 1, further comprising a cam assembly having a common drive shaft (66) for rotatably supporting the first cam member (60), the second cam member (62) and the third cam member (64).

3. A strapping tool according to claim 2, further comprising a cam drive motor (70) rotatably coupled to the common drive shaft (66) of the cam assembly.

4. A strapping tool according to any one of the preceding claims, further comprising a strap shearing edge (44) disposed on the welding pad (40) for cutting an upper strap portion (3) as the welding pad (40) moves toward the second support member (42).

5. A strapping tool according to any one of the preceding claims, further comprising a first roller member (36) coupled to the sealing gripper (30) and engagable by the first cam member (60), a second roller (46) coupled to the welding pad (40) and engagable by the third cam member (64), and a switch engageable by the second cam member (62) for actuating the vibrator motor (48).

6. The strapping tool according to any one of the preceding claims, further comprising a strap tensioning feed wheel (20) movable toward a foot member (22) to engage and tension a feed strap portion, and a tensioning gripper (10) movable toward a third support member (12) to engage and retain a free strap end portion (2) during strap tensioning.

7. A method for welding overlapping strap portions (2,3) with a strapping tool (100), the method comprising:
moving a sealing gripper (30) toward a first support member (32) with a first cam member (60) to engage and retain tensioned strap disposed between the sealing gripper (30) and the first support member (32);
enabling a vibrator motor (48) with a second cam member (62) to vibrate a welding pad (40); and,
moving the vibrating welding pad (40) toward a second support member (42) with a third cam member (64) to engage and weld overlapping strap portions (2,3) disposed between the welding pad (40) and the second support member (42).

8. A method according to Claim 7, further comprising disabling the vibrator motor (48) with the second cam member (62), and maintaining the welding pad (40) positioned toward the second support member (42) with the third cam member (64) for a cool down period after disabling the vibrator motor (48), and moving the welding pad (40) away from the second support member (42) after the cool down period.

9. A method according to claim 7 or 8, further comprising rotatably driving the first cam member (60), the second cam member (62), and the third cam member (64) with a common drive shaft (66) to accurately control actuation of the sealing gripper (30), actuation of the welding pad (40) and the cool down time period.

10. The method according to claim 7, 8 or 9, further comprising tensioning strap (3) disposed about a load with a strap tensioning feed wheel (20), and retaining a free strap end portion (2) with a tensioning gripper (10) during strap tensioning.

## Patentansprüche

1. Umreifungswerkzeug (100) zum Schweißen überlappender Bandteile (23), aufweisend:
eine Versiegelungsgreifvorrichtung (30), die zu einem ersten Trägerelement (32) hin bewegbar ist;
ein vibrierbarer Schweißstempel (40), der zu einem zweiten Trägerelement (42) hin bewegbar ist;
einen Vibratormotor (48), der zum Vibrieren des Schweißstempels (40) betätigbar ist;
ein erstes Nockenelement (60) zum Bewegen der Versiegelungsgreifvorrichtung (30) zum ersten Trägerelement (32) hin, um das zwischen der Versiegelungsgreifvorrichtung (30) und dem ersten Trägerelement (32) angeordnete gespannte Band (3) in Eingriff zu bringen und zu halten;
ein drittes Nockenelement (64) zum Bewegen des Schweißstempels (40) zum zweiten Trägerelement (42) hin, um die zwischen dem Schweißstempel (40) und dem zweiten Trägerelement (42) angeordneten, sich überlappenden Bandteile (23) in Eingriff zu bringen und zu verschweißen; und
**gekennzeichnet durch**
ein zweites Nockenelement (62) zum Einschalten des Vibratormotors (48) zum Vibrieren des Schweißstempels (40).

2. Umreifungswerkzeug nach Anspruch 1, ferner eine Nockenanordnung aufweisend, die eine gemeinsame Antriebswelle (66) aufweist zum drehbaren Tragen des ersten Nockenelements (60), des zweiten Nockenelements (62) und des dritten Nockenelements (64).

3. Umreifungswerkzeug nach Anspruch 2, ferner einen Nockenantriebsmotor (70) aufweisend, der drehbar mit der gemeinsamen Antriebswelle (66) der Nockenanordnung gekuppelt ist.

4. Umreifungswerkzeug nach einem der vorhergehenden Ansprüche, ferner eine Bandscherkante (44) aufweisend, die am Schweißstempel (40) angeordnet ist, um ein oberes Bandteil (3) abzuschneiden, wenn der Schweißstempel (40) sich zum zweiten Trägerelement (42) hin bewegt.

5. Umreifungswerkzeug nach einem der vorhergehenden Ansprüche, ferner aufweisend: ein erstes Rollenelement (36), das mit der Versiegelungsgreifvorrichtung (30) gekuppelt ist und mit dem ersten Nockenelement (60) in Eingriff bringbar ist, ein zweites Rollenelement (46), das mit dem Schweißstempel (40) gekuppelt ist und durch das dritte Nockenelement (64) in Eingriff bringbar ist, und einen Schalter, wobei das zweite Nockenelement (62) mit dem Schalter zum Betätigen des Vibratormotors (48) in Eingriff bringbar ist.

6. Umreifungswerkzeug nach einem der vorhergehenden Ansprüche, ferner ein Bandspann-Zufuhrrad (20), das zu einem Fußelement (22) hin bewegbar ist, um mit einem Zufuhrbandteil in Eingriff zu gelangen und es zu spannen, und eine Spann-Greifvorrichtung (10) aufweisend, die zu einem dritten Trägerelement (12) hin bewegbar ist, um mit einem freien Bandendteil (2) während des Spannen des Bandes in Eingriff zu gelangen und es zu halten.

7. Verfahren zum Schweißen sich überlappender Bandteile (2, 3) mit einem Umreifungswerkzeug (100), aufweisend:
Bewegen einer Versiegelungsgreifvorrichtung (30) mit einem ersten Nockenelement (60) zu einem ersten Trägerelement (32) hin, um das zwischen der Versiegelungsgreifvorrichtung (30) und dem ersten Trägerelement (32) angeordnete, gespannte Band in Eingriff zu bringen und zu halten;
Aktivieren eines Vibratormotors (48) mit einem zweiten Nockenelement (62), um einen Schweißstempel (40) zu vibrieren; und
Bewegen des vibrierenden Schweißstempels (40) mit einem dritten Nockenelement (64) zu einem zweiten Trägerelement (42) hin, um sich überlappende Bandteile (2, 3), die zwischen dem Schweißstempel (40) und dem zweiten Trägerelement (42) angeordnet sind, in Eingriff zu bringen und zu verschweißen.

8. Verfahren nach Anspruch 7, ferner aufweisend: Deaktivieren des Vibratormotors (48) mit dem zweiten Nockenelement (62) und positioniert Halten des Schweißstempels (40) mit dem dritten Nockenelement (64) zum zweiten Trägerelement (42) hin während einer Abkühlperiode nach dem Deaktivieren des Vibratormotors (48), und Bewegen des Schweißstempels (40) vom zweiten Trägerelement (42) weg nach der Abkühlperiode.

9. Verfahren nach Anspruch 7 oder 8, ferner aufweisend drehend Antreiben des ersten Nockenelements (60), des zweiten Nockenelements (62) und des dritten Nockenelements (64) mit einer gemeinsamen Antriebswelle (66), um die Betätigung der Versiegelungsgreifvorrichtung (30), die Betätigung des Schweißstempels (40) und die Abkühlperiode genau zu steuern.

10. Verfahren nach Anspruch 7, 8 oder 9, ferner aufweisend Spannen des Bandes (3), das um eine Last angeordnet ist, mit einem Bandspann-Zufuhrrad (20), und Halten eines freien Bandendteils (2) mit einer Spann-Greifvorrichtung (10) während des Bandspannens.

## Revendications

1. Outil à cercler (100) pour le soudage de parties de bande en recouvrement (23), cet outil comprenant :
une griffe de scellement (30) mobile vers un premier élément support (32),
un tampon de soudage vibrant (40) mobile vers un deuxième élément support (42),
un moteur vibrateur (48) actionnable pour faire vibrer le tampon de soudage (40),
un premier élément came (60) destiné à déplacer la griffe de scellement (30) vers le premier élément support (32) pour la mettre en prise avec une bande tendue (3) placée entre la griffe de scellement (30) et le premier élément support (32) et faire qu'elle retienne celle-ci,
un troisième élément came (64) destiné à déplacer le tampon de soudage (40) vers le deuxième élément support (42) pour le mettre en prise avec des parties de bande en recouvrement (23) placées entre le tampon de soudage (40) et le deuxième élément support (42) et faire qu'il soude celles-ci, et
**caractérisé par** un deuxième élément came (62) destiné à permettre au moteur vibrateur (48) de faire vibrer le tampon de soudage (40).

2. Outil à cercler selon la revendication 1, comprenant en outre un ensemble de cames comportant un arbre commun d'entraînement (66) destiné à supporter en rotation le premier élément came (60), le deuxième élément came (62) et le troisième élément came (64).

3. Outil à cercler selon la revendication 2, comprenant en outre un moteur d'entraînement de cames (70) accouplé en rotation à l'arbre commun d'entraînement (66) de l'ensemble de cames.

4. Outil à cercler selon l'une des revendications précédentes, comprenant en outre une arête de cisaillement de bande (44) située sur le tampon de soudage (40) et destinée à couper une partie supérieure de bande (3) lorsque le tampon de soudage (40) se déplace vers le deuxième élément support (42).

5. Outil à cercler selon l'une des revendications précédentes, comprenant en outre un premier élément galet (36) attaché à la griffe de scellement (30) et avec lequel le premier élément came (60) peut venir en prise, un deuxième galet (46) attaché au tampon de soudage (40) et avec lequel le troisième élément came (64) peut venir en prise, et un interrupteur avec lequel le deuxième élément came (62) peut venir en prise pour actionner le moteur vibrateur (48).

6. Outil à cercler selon l'une des revendications précédentes, comprenant en outre une roue d'avance et de tension de bande (20) mobile vers un élément d'appui (22) pour venir en prise et tendre une partie de bande d'alimentation, et une griffe de tension (12) mobile vers un troisième élément support (12) pour venir en prise avec une partie d'extrémité libre de bande (2) pendant la tension de la bande et la retenir.

7. Procédé de soudage de parties de bande en recouvrement (2, 3) au moyen d'un outil à cercler (100), ce procédé comprenant les opérations consistant à :
déplacer une griffe de scellement (30) vers un premier élément support (32) au moyen d'un premier élément came (60) pour qu'elle vienne en prise avec une bande tendue placée entre la griffe de scellement (30) et le premier élément support (32) et la retienne,
mettre en action un moteur vibrateur (48) au moyen d'un deuxième élément came (62) pour faire vibrer un tampon de soudage (40), et
déplacer le tampon de soudage vibrant (40) vers un deuxième élément support (42) au moyen d'un troisième élément came (64) pour qu'il vienne en prise avec des parties de bande en recouvrement (2, 3) placées entre la tampon de soudage (40) et le deuxième élément support (42) et les soude.

8. Procédé selon la revendication 7, comprenant en outre les opérations consistant à mettre hors d'action le moteur vibrateur (48) au moyen du deuxième élément came (62), maintenir le tampon de soudage (40) placé vers le deuxième élément support (42) au moyen du troisième élément came (64) pendant une période de refroidissement après la mise hors d'action du moteur vibrateur (48), et écarter le tampon de soudage (40) du deuxième élément support (42) après la période de refroidissement.

9. Procédé selon l'une des revendications 7 et 8, comprenant en outre l'opération consistant à faire tourner le premier élément came (60), le deuxième élément came (62) et le troisième élément came (64) au moyen d'un arbre commun d'entraînement (66) pour commander avec précision l'actionnement de la griffe de scellement (30), l'actionnement du tampon de soudage (40) et la période de refroidissement.

10. Procédé selon l'une des revendications 7, 8 et 9, comprenant en outre la tension d'une bande (3) placée autour d'une charge au moyen d'une roue d'avance et de tension de bande (20) et la retenue d'une partie d'extrémité libre (2) de la bande au moyen d'une griffe de tension (10) pendant la tension de la bande.
